# EUROPEAN PATENT APPLICATION

(11) **EP 2 682 842 A1**
(43) Date of publication of application: **08.01.2014**
(21) Application number: 13175242.0
(22) Date of filing: 05.07.2013
(51) Int. Cl.: G06F 3/01, G06F 3/048, G06F 3/0485

(54) **User interface method and apparatus therefor**

(30) Priority: 06.07.2012 KR 20120073921
(71) Applicant: Samsung Electronics Co., Ltd, Gyeonggi-do 443-742 (KR)
(72) Inventor: Kang, Ji-Young, Gyeonggi-do (KR); Park, Mi-Jung, Gyeonggi-do (KR); Lee, Chi-Hoon, Seoul (KR); Oh, Sae-Gee, Gyeonggi-do (KR)
(74) Representative: Nederlandsch Octrooibureau

(57) **Abstract**

A User Interface method and an apparatus therefor are provided. The method includes dividing a photographing region into a plurality of portions of the photographing region, acquiring corresponding information from respective image signals output while being classified according to the divided portion of the photographing region, verifying a command corresponding to the acquired information, and performing an operation according to the verified command.

## Description

### BACKGROUND OF THE INVENTION

### 1. Field of the Invention:

The present invention relates to a method and apparatus for controlling and displaying User Interface (UI). More particularly, the present invention relates to a method and apparatus for controlling and displaying a UI which generates input capable of replacing an event according to a push of a button without requiring the push of the button.

### 2. Description of the Related Art:

Recently, as portable electronic devices have rapidly become widely adopted, the portable devices have become necessities of life for modem people. These portable electronic devices have evolved into multimedia communication devices capable of providing various data transmission services and various additional services as well as an original voice communication service. As the portable electronic devices are further developed, the services provided by the portable electronic devices correspondingly increase based on similar development endeavors. In addition, User Interface (UI) technologies for controlling the portable electronic devices are similarly being developed.

Development of the portable electronic devices focuses on improving convenience to a user for user input by applying a touch screen based on a Graphical User Interface (GUI). In addition, while a utilization degree of each of the portable electronic devices applying the touch screen is enhanced, the user shows a trend of preferring a larger touch screen. Because most buttons for input to the portable electronic devices are configured in the touch screen and implemented in software, the number of hardware-like buttons on such portable electronic devices is reduced.

However, according to the related art, if the user touches a capacitive touch screen with the user's hand on which a glove or other covering is being worn, input is not generated. For example, there is no input means capable of controlling an operation of a portable electronic device according to the related art when the portable electronic device is in a state in which it is difficult for the user to touch the capacitive touch screen. Therefore, the degree to which utilization of the portable electronic device according to the related art is degraded.

Therefore, a need exists for a method and apparatus for controlling and displaying a UI which generates input capable of replacing an event according to a push of a button without requiring the push of the button.

The above information is presented as background information only to assist with an understanding of the present disclosure. No determination has been made, and no assertion is made, as to whether any of the above might be applicable as prior art with regard to the present invention.

### SUMMARY OF THE INVENTION

Aspects of the present invention are to address at least the above-mentioned problems and/or disadvantages and to provide at least the advantages described below. Accordingly, an aspect of the present invention is to provide a User Interface (UI) method of generating input capable of replacing an event according to a push of a button without pushing the button and an apparatus therefor.

Another aspect of the present invention is to provide a UI method of generating input capable of replacing a touch event although a user does not touch a touch screen and an apparatus therefor.

Another aspect of the present invention is to provide a UI method of controlling an operation of a portable electronic device according to motions (e.g., a nod, a face direction, user's eyes, and the like) of an object.

In accordance with an aspect of the present invention, a method is provided. The method includes dividing a photographing region into a plurality of portions of the photographing regions, acquiring corresponding information from respective image signals output while being classified according to the divided portion of the photographing regions, verifying a command corresponding to the acquired information, and performing an operation according to the verified command.

In accordance with another aspect of the present invention, a method is provided. The method includes dividing a photographing region into a plurality of portions of the photographing regions, performing a first operation upon detection that an object is moved from a first portion of the photographing region to a second portion of the photographing region from an image signal output from the photographing region, and performing a second operation when a corresponding motion of the object is detected from an image signal output from the second portion of the photographing region.

In accordance with another aspect of the present invention, a device is provided. The device includes a camera, at least one processor, a memory, and at least one module, each of which is stored in the memory and is configured to be executed by the at least one processor, wherein at least one of the at least one module divides a photographing region of the camera into a plurality of portions of the photographing region, acquires corresponding information from respective image signals output while being classified according to the divided portion of the photographing region, verifies a command corresponding to the acquired information, and performs an operation according to the verified command.

In accordance with another aspect of the present invention, an electronic device is provided. The device includes a camera, at least one processor, a memory, and at least one module, each of which is stored in the memory and is configured to be executed by the at least one processor, wherein at least one of the at least one module divides a photographing region of the camera into a plurality of portion of the photographing region, performs a first operation upon detection that an object is moved from a first portion of the photographing region to a second portion of the photographing region from an image signal output from the photographing region, and performs a second operation when a corresponding motion of the object is detected from an image signal output from the second portion of the photographing region.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain exemplary embodiments of the present invention will be more apparent from the following description taken in conjunction with the accompanying drawings, in which:

FIG. 1 is a block diagram illustrating configuration of an electronic device according to an exemplary embodiment of the present invention;

FIG. 2 illustrates a User Interface (UI) method according to an exemplary embodiment of the present invention;

FIG. 3 is a flowchart illustrating a UI method according to an exemplary embodiment of the present invention;

FIG. 4 is a flowchart illustrating a process of acquiring information from an image signal of a photographing region such as, for example, a process of acquiring information from the image signal of the photographing region described in relation to step 301 of FIG. 3 according to an exemplary embodiment of the present invention;

FIG. 5 is a flowchart illustrating a process of acquiring information from an image signal of a photographing region such as, for example, a process of acquiring information from the image signal of the photographing region described in relation to step 301 of FIG. 3 according to an exemplary embodiment of the present invention;

FIG. 6 is a flowchart illustrating a process of acquiring information from an image signal of a photographing region such as, for example, a process of acquiring information from the image signal of the photographing region described in relation to step 301 of FIG. 3 according to an exemplary embodiment of the present invention;

FIG. 7 is a flowchart illustrating a process of verifying a command corresponding to information acquired from an image signal of a photographing region such as, for example, a process of verifying the command corresponding to the acquired information described in relation to step 303 of FIG. 3 according to an exemplary embodiment of the present invention; and

FIGs. 8A to 8D illustrate a UI method according to an exemplary embodiment of the present invention.

Throughout the drawings, it should be noted that like reference numbers are used to depict the same or similar elements, features, and structures.

### DETAILED DESCRIPTION OF EXEMPLARY EMBODIMENTS

The following description with reference to the accompanying drawings is provided to assist in a comprehensive understanding of exemplary embodiments of invention of the invention as defined by the claims and their equivalents. Accordingly, those of ordinary skill in the art will recognize that various changes and modifications of the embodiments described herein can be made without departing from the scope and spirit of the invention. In addition, descriptions of well-known functions and constructions may be omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

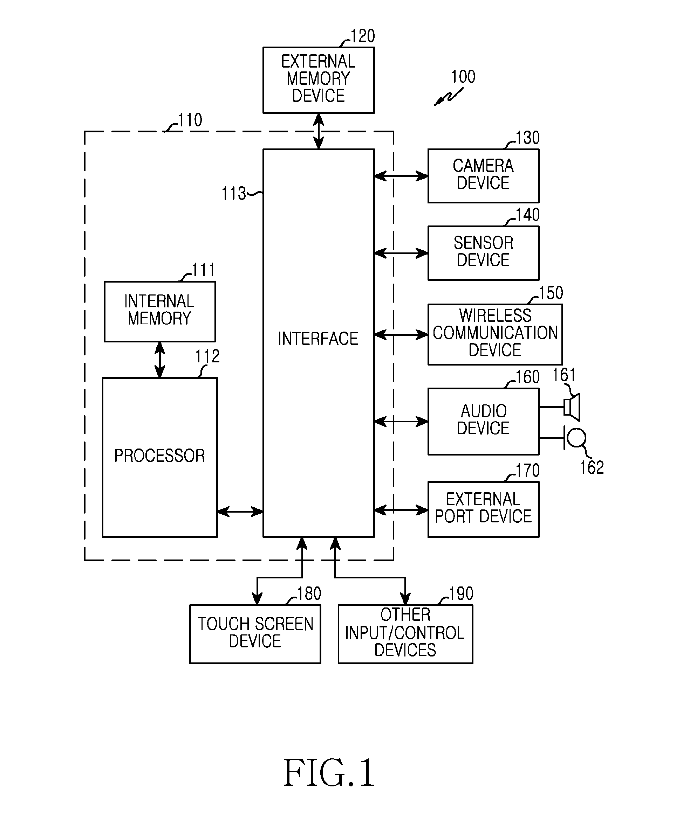

FIG. 1 is a block diagram illustrating configuration of an electronic device according to an exemplary embodiment of the present invention.

This electronic device 100 may be a portable electronic device. The electronic device 100 may be an apparatus such as a portable terminal, a mobile phone, a mobile pad, a media player, a tablet computer, a handheld computer, a Personal Digital Assistant (PDA), a Global Positioning System (GPS) device, and the like. The electronic device 100 may also be a portable electronic device including a device in which two or more functions are combined among the above-identified apparatuses.

The electronic device 100 includes a host device 110, an external memory device 120, a camera device 130, a sensor device 140, a wireless communication device 150, an audio device 160, an external port device 170, a touch screen device 180, and other input/control devices 190. The external memory device 120 and the external port device 170 may be a plurality of external memory devices and external port devices, respectively.

The host device 110 includes an internal memory 111, one or more processors 112, and an interface 113. The internal memory 111, the one or more processors 112, and the interface 113 may be separately configured or may be configured in one or more Integrated Circuits (ICs).

The processor 112 executes several software programs and performs several functions for the electronic device 100. For example, the processor 112 performs process and control for audio communication, video communication, data communication, and the like. In addition to these general functions, the processor 112 executes a software module (command set) stored in the internal memory 111 and/or the external memory device 120 and performs several functions corresponding to the software module. Also, in addition to these general functions, the processor 112 plays a role in executing a specific software module (command set) stored in the internal memory 111 and/or the external memory device 120 and performing several specific functions corresponding to the specific software module. For example, the processor 112 interworks with software modules stored in the internal memory 111 and/or the external memory devices 120 and performs exemplary embodiments of the present invention. Also, the processor 112 may include one or more data processors, an image processor, or a codec. In addition, the electronic device 100 may include the data processor, the image processor, or the codec, separately.

The interface 113 connects the host device 110 with several components of the electronic device 100.

Particularly, in accordance with an exemplary embodiment of the present invention, the processor 112 controls the camera device 130. The camera device 130 may perform a camera function such as a photo and video clip recording function, and the like. The camera device 130 includes a Charge Coupled Device (CCD), a Complementary Metal Oxide Semiconductor (CMOS), and/or the like. The camera device 130 adjusts hardware-like configuration changes, for example, lens movement, the F-number of a diaphragm, and the like, according to a camera module executed by the processor 112.

Various components of the electronic device 100 may be connected through one or more communication buses (not written in reference numbers) or stream lines (not written in reference numbers).

The sensor device 140 may include a motion sensor, an optical sensor, a temperature sensor, and the like, and may perform several functions. For example, the motion sensor may detect motion of the electronic device 100. As another example, the optical sensor may detect light around the electronic device 100.

The wireless communication device 150 may perform wireless communication. The wireless communication device 150 may include a Radio Frequency (RF) transceiver and a light (e.g., infrared ray) transceiver. The wireless communication device 150 may be designed to operate through one or more communication networks, such as a Global System for Mobile communication (GSM) network, an Enhanced Data GSM Environment (EDGE) network, a Code Division Multiple Access (CDMA) network, a W-CDMA network, a Long Term Evolution (LTE) network, an Orthogonal Frequency Division Multiple Access (OFDMA) network, a Wireless-Fidelity (Wi-Fi) network, a Worldwide interoperability for Microwave Access (WiMax) network, a Bluetooth network, and/or the like.

The audio device 160 connects to a speaker 161 and a microphone 162 and is responsible for an audio input and output function such as a voice recognition function, a voice copy function, a digital recording function, a phone call function, and the like. For example, the audio device 160 communicates with a user through the speaker 161 and the microphone 162. Also, the audio device 160 receives a data signal from the host device 110, converts the received data signal into an electric signal, and outputs the converted electric signal through the speaker 161. The speaker 161 converts a band of the electric signal into an audible frequency band and outputs the converted signal. The microphone 162 converts sound waves transmitted from people or other sound sources into electric signals. Also, the audio device 160 receives an electric signal from the microphone 162, converts the received electric signal into an audio data signal, and transmits the converted audio data signal to the host device 110. The audio device 160 may include an earset, a headphone, or a headset which is attachable and detachable to the electronic device 100.

The external port device 170 connects the electronic device 100 to another electronic device directly or connects the electronic device 100 to another electronic device indirectly through a network (e.g., the Internet, an intranet, a wireless Local Area Network (LAN), and the like).

The touch screen device 180 provides an input and output interface between the electronic device 100 and the user. The touch screen device 180 applies touch sensing technologies, transmits touch input of the user to the host device 110, and provides visual information provided from the host device 110, such as texts, graphics, videos, and the like, to the user. Also, the touch screen device 180 may further apply not only capacitive, resistive, infrared ray, and surface acoustic wave technologies but also certain multi-touch sensing technologies including other proximity sensor arrays or other elements.

The other input/control devices 190 may include an up/down button for volume control. In addition, the other input/control devices 190 may include at least one of pointer devices, such as a push button, a rocker button, a locker switch, a thumb wheel, a dial, a stick, a stylus, and the like, each of which has a corresponding function.

The external memory device 120 includes a high-speed Random Access Memory (RAM) such as one or more magnetic storages, a non-volatile memory, one or more optical storages, and/or a flash memory (e.g., a NAND flash memory or a NOR flash memory). The external memory device 120 may include a non-transitory computer-readable storage medium. The external memory device 120 includes software components. The software components include an Operating System (OS) module, a communication module, a graphic module, a User Interface (UI) module, a codec module, a camera module, one or more application modules, and the like. The modules may be expressed in a set of instructions, an instruction set, programs, and/or the like.

The OS module may correspond to an embedded OS such as Windows, Linux, Darwin, RTXC, UNIX, OS X, VxWorks, and/or the like. The OS module includes several software components for controlling a general system operation. For example, control of this general system operation includes memory management and control, storage hardware (device) control and management, power control and management, and the like. In addition, the OS module also performs a function for smoothly communicating between several hardware devices and software components (modules).

The communication module may communicate with other electronic devices such as a computer, a server, a portable terminal, and the like through the wireless communication device 150 and/or the external port device 170.

The graphic module includes several software components for providing and displaying graphics on the touch screen device 180. The term "graphics" includes texts, web pages, icons, digital images, videos, animations, and the like.

The UI module includes several software components related to a UI. In addition, the UI module includes content about whether a state of a UI is changed to any state, whether a state of a UI is changed in any condition, and the like.

The codec module may include software components related to encoding and decoding of video files.

The camera module includes cameral-related software components capable of performing camera-related processes and functions. Particularly, in accordance with an exemplary embodiment of the present invention, the camera module acquires information from an image signal output from a region at which the camera device 130 photographs an object, verifies a command corresponding to the acquired information, and performs an operation according to the verified command.

The camera module divides the photographing region into a plurality of portions of the photographing region and acquires respective information from respective image signals output while being classified according to the corresponding portion of the photographing region. In addition, the camera module acquires information from an image signal output from a previous portion of the photographing region and acquires information from an image signal output from a next portion of the photographing region after a threshold time.

When performance of an operation according to a command corresponding to the information acquired from the image signal output from the previous portion of the photographing region is completed, the camera module may perform an operation according to a command corresponding to the information acquired from the image signal output from the next portion of the photographing region. In addition, when performance of an operation according to the command corresponding to the information acquired from the image signal output from the previous portion of the photographing region is completed, the camera module may verify a next portion of the photographing region related to the completed operation and may acquire information from an image signal output from the verified next portion of the photographing region.

Also, the camera module may detect a movement direction of an object from the image signal output from the previous portion of the photographing region, may verify a next portion of the photographing region which is in the detected movement direction, and may acquire information from an image signal output from the verified next portion of the photographing region.

In addition, when a command corresponding to information acquired from an image signal output from a portion of the photographing region is identical to a previously specified command, the camera module may determine a command for an operation.

According to exemplary embodiments of the present invention, information acquired from a photographing region at the camera module includes motion information of an object, for example, at least one body of a person. Also, the camera module provides a visual cue for previously informing that an operation is any operation before the corresponding operation is performed. In accordance with operations of the camera module, an input or control event, corresponding to an event according to a push of a button of the electronic device 100 and a touch event of the touch screen, may be generated from an image received from the camera device 130.

Also, the camera module divides a photographing region of the camera device 130 into a plurality of portions of the photographing region. When the camera module detects that an object is moved from a first portion of the photographing region to a second portion of the photographing region from an image signal from the photographing region, the camera module performs a first operation. When the camera module detects a corresponding motion of the object from an image signal output from the second photographing region, the camera module may perform a second operation. This first operation may be a visual cue for the second operation.

Hereinafter, a description will be given in which information acquired from an image photographed by the camera module relates to a person. However, it is obvious that the information may be replaced with various objects such as animals, places, and the like.

The application module includes a browser function, an email function, an instant message function, a word processing function, a keyboard emulation function, an address book function, a touch list function, a widget function, a Digital Right Management (DRM) function, a voice recognition function, a voice copy function, a position determining function, a location based service function, and the like. The external memory device 120 may further include additional modules (commands) in addition to the above-described modules.

A variety of functions of the electronic device 100 according to an exemplary embodiment of the present invention may be executed by one or more streaming processing, hardware including an Application Specific Integrated Circuit (ASIC), software, and/or combination of thereof.

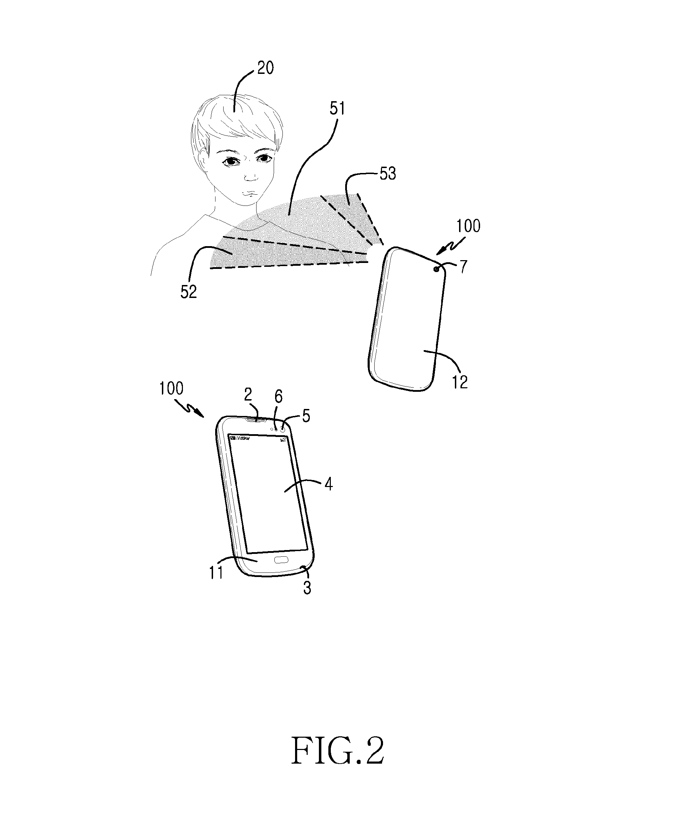

FIG. 2 illustrates a UI method according to an exemplary embodiment of the present invention.

Referring to FIG. 2, the electronic device 100 includes a speaker 2, a microphone 3, a touch screen 4, a front camera 5, and a sensor 6. The speaker 2 is installed on a front surface 11 of the electronic device 100 and converts a band of an electric signal into an audible frequency band and outputting the converted signal. The microphone 3 converts sound waves transmitted from people or other sound sources into electric signals. The touch screen 4 outputs an image signal and receives a touch of a user 20. The front camera 5 photographs objects, and a sensor 6 detects a motion, light, a temperature, and the like. The electronic device 100 may further include a rear camera 7 installed in a rear surface 12 thereof. The rear camera 7 may photograph objects.

According to exemplary embodiments of the present invention, the user 20 may input signals to the electronic device 100 and may control the electronic device 100 through an action of photographing his or her face through the front camera 5 of the electronic device 100.

A region photographed by the camera 5 may be divided into a plurality of portion regions. For example, a camera module according to an exemplary embodiment of the present invention may divide a photographing region of the camera 5 into a middle portion of the photographing region 51, a left portion of the photographing region 52, and a right portion of the photographing region 53.

The camera module acquires information about motion (e.g., face movement, a nod), a focal length, and the like from image signals, output from the respective portion of the photographing regions (e.g., the middle portion of the photographing region 51, the left portion of the photographing region 52, and/or the right portion of the photographing region 53) about the face of the user 20, and performs an operation according to a command corresponding to the acquired information.

Particularly, the camera module specifies respective commands of the electronic device 110 corresponding to the respective portion of the photographing regions (e.g., the middle portion of the photographing region 51, the left portion of the photographing region 52, and/or the right portion of the photographing region 53). When a command verified from each of the portion of the photographing region is identical to a previously specified command, the camera module performs an operation according to the command. In other words, the camera module specifies an operation corresponding to the respective photographing regions 51-53 in advance. For example, when previously defined information is acquired from an image signal, the camera module performs the operation.

For example, in accordance with an exemplary embodiment of the present invention, the electronic device 100 may generate an input or control signal corresponding to a push event of a button thereof and a touch event using only an image photographed through the camera 5 without using the push event of the button, and/or the touch event through a touch screen. Accordingly, because the user 20 may control an operation of the electronic device 100 without operating a button and a touch screen of the electronic device 100, the electronic device 100 may provide a convenience to the user 20.

Operations of the electronic device 100 include an operation (e.g., a GUI operation) about videos, an operation (e.g., a volume adjustment operation) about audio control.

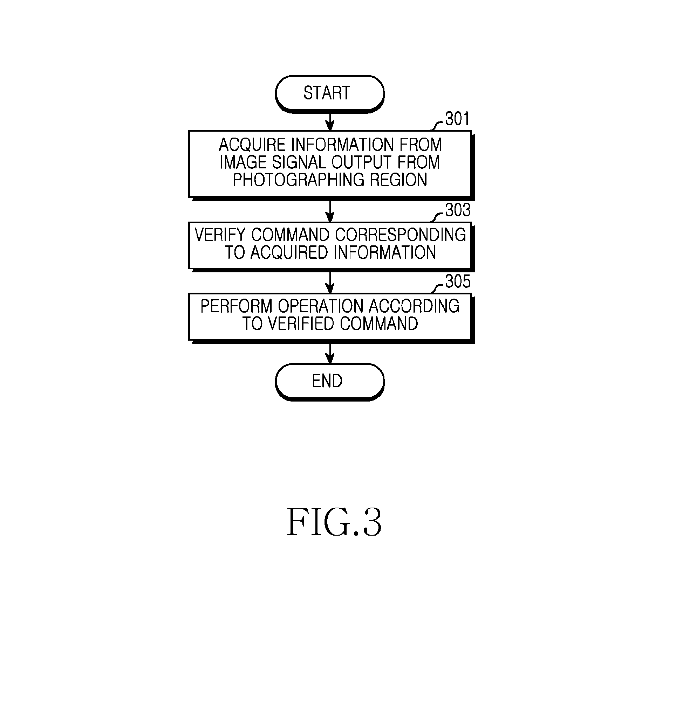

FIG. 3 is a flowchart illustrating a UI method according to an exemplary embodiment of the present invention.

Referring to FIGs. 1 and 3, the processor 112 acquires information from an image signal output from a photographing region in step 301. For example, the processor 112 may acquire information about face recognition, a face direction, person's eyes, and the like from an image signal about a person output from the photographing region.

The processor 112 verifies a command corresponding to the acquired information in step 303.

The processor 112 performs an operation according to the verified command in step 305.

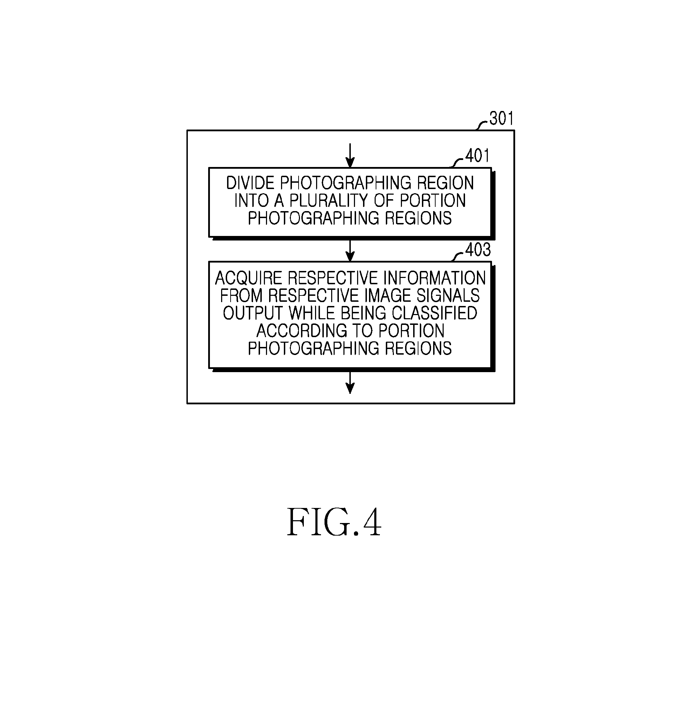

FIG. 4 is a flowchart illustrating a process of acquiring information from an image signal of a photographing region such as, for example, a process of acquiring information from the image signal of the photographing region described in relation to step 301 of FIG. 3 according to an exemplary embodiment of the present invention.

Referring to FIGs. 1 and 4, the processor 112 divides a photographing region into a plurality of portions of the photographing region in step 401.

The processor 112 acquires respective information from respective image signals output while being classified according to the corresponding portion of the photographing region in step 403.

This process illustrated in FIG. 4 shows an example in which the processor 112 acquires information from image signals successively output while being classified according to the partial photographing regions.

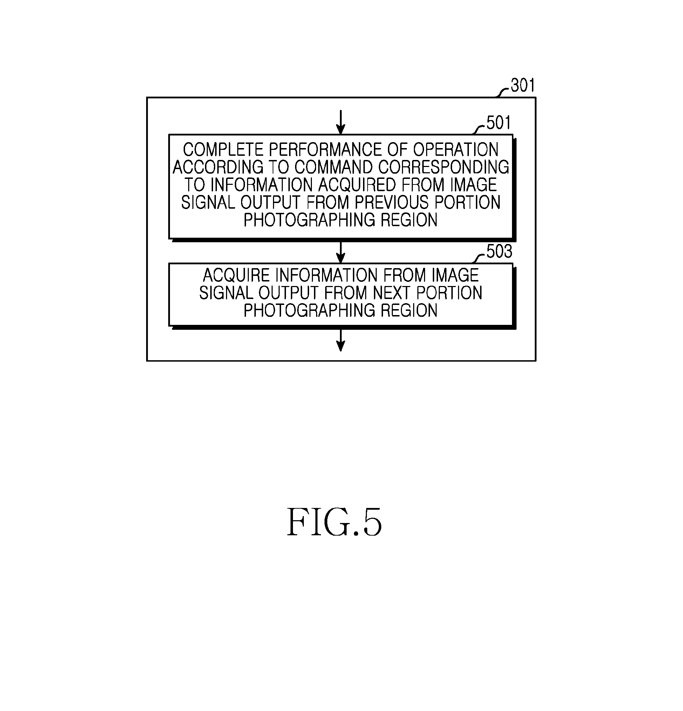

FIG. 5 is a flowchart illustrating a process of acquiring information from an image signal of a photographing region such as, for example, a process of acquiring information from the image signal of the photographing region described in relation to step 301 of FIG. 3 according to an exemplary embodiment of the present invention.

Referring to FIG. 5, the illustrated process corresponds to a process of dividing a photographing region into a plurality of portions of the photographing regions.

As illustrated in FIG. 5, the processor 112 completes performance of an operation according to a command corresponding to information acquired from an image signal output from a previous portion of the photographing region in step 501.

The processor 112 acquires information from an image signal from a next portion of the photographing region in step 503.

If a certain process of acquiring the information from the image signal output from the previous portion of the photographing region, verifying the command corresponding to the acquired information, and performing the operation according to the verified command is completed, the process illustrated in FIG. 5 shows an example in which the processor 112 also applies this process to the other partial photographing region equally.

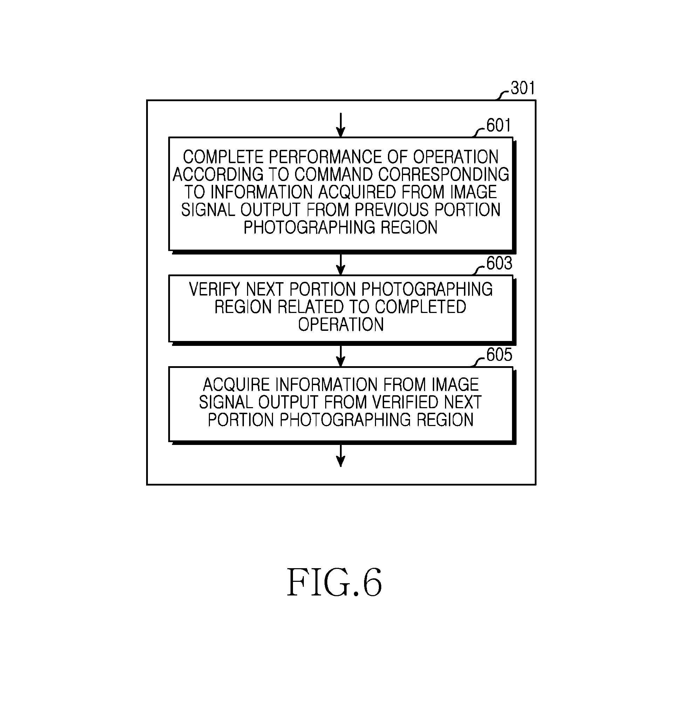

FIG. 6 is a flowchart illustrating a process of acquiring information from an image signal of a photographing region such as, for example, a process of acquiring information from the image signal of the photographing region described in relation to step 301 of FIG. 3 according to an exemplary embodiment of the present invention.

Referring to FIG. 6, the illustrated process corresponds to a process of dividing a photographing region into a plurality of portions of the photographing region.

As illustrated in FIG. 6, the processor 112 completes performance of an operation according to a command corresponding to information acquired from an image signal output from a previous portion of the photographing region in step 601.

The processor 112 verifies a next portion of the photographing region related to the completed operation in step 603.

The processor 112 acquires information from an image signal output from the verified next portion of the photographing region in step 605.

If a certain process of acquiring the information from the image signal output from the previous portion of the photographing region, verifying the command corresponding to the acquired information, and performing the operation according to the verified command is completed, the process illustrated in FIG. 6 shows an example in which the processor 112 also applies this process to the next portion of the photographing region related to the completed operation.

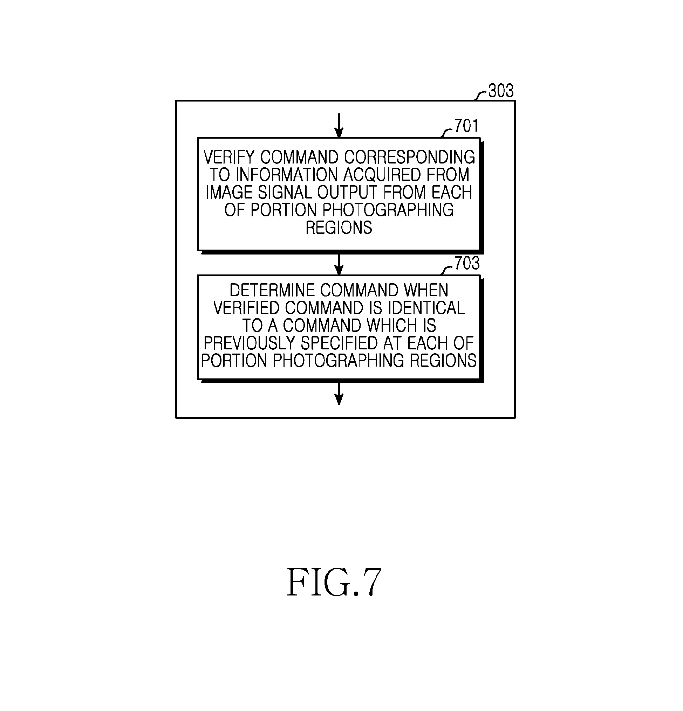

FIG. 7 is a flowchart illustrating a process of verifying a command corresponding to information acquired from an image signal of a photographing region such as, for example, a process of verifying the command corresponding to the acquired information described in relation to step 303 of FIG. 3 according to an exemplary embodiment of the present invention.

Referring to FIG. 7 the illustrated process corresponds to a process of dividing a photographing region into a plurality of portions of the photographing region.

As illustrated in FIG. 7, the processor 112 verifies a command corresponding to information acquired from each portion of the photographing region in step 701.

When the verified command is identical to a command which is previously specified at each portion of the photographing region, the processor 112 determines the command in step 703.

The process of FIG. 7 shows that the processor 112 permits only operations according to the commands which are previously specified while being classified according to the corresponding portion of the photographing region. For this reason, the information acquired from the image signals output from the partial photographing regions is specified. For example, when previously specified information must be acquired from the image signals of the portion of the photographing region, a corresponding operation may be performed.

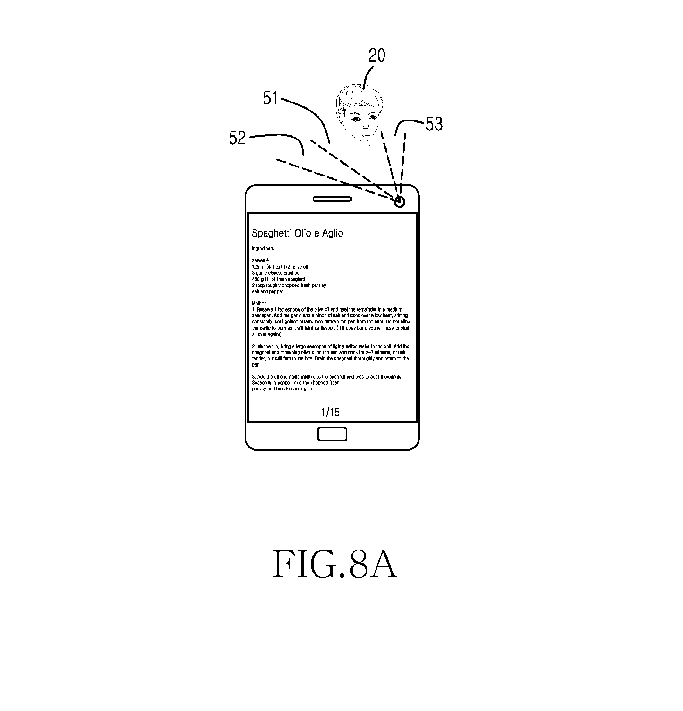

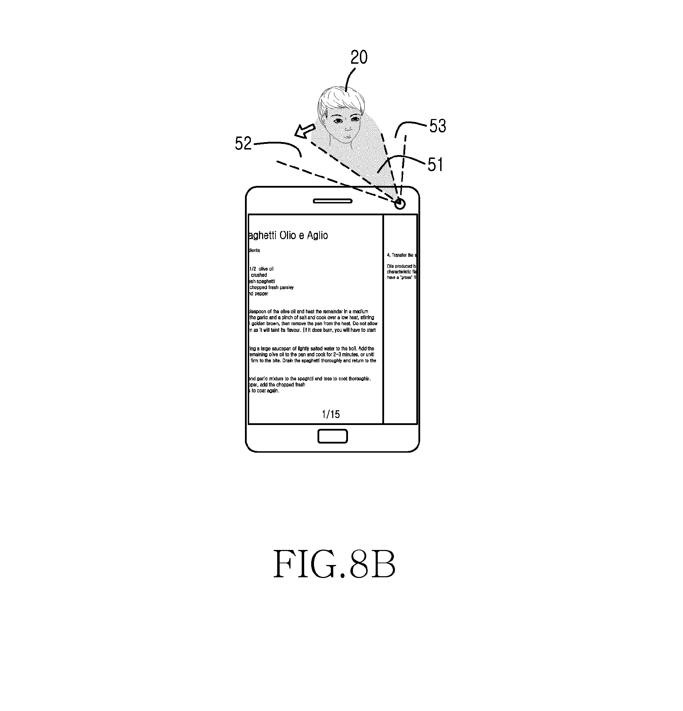

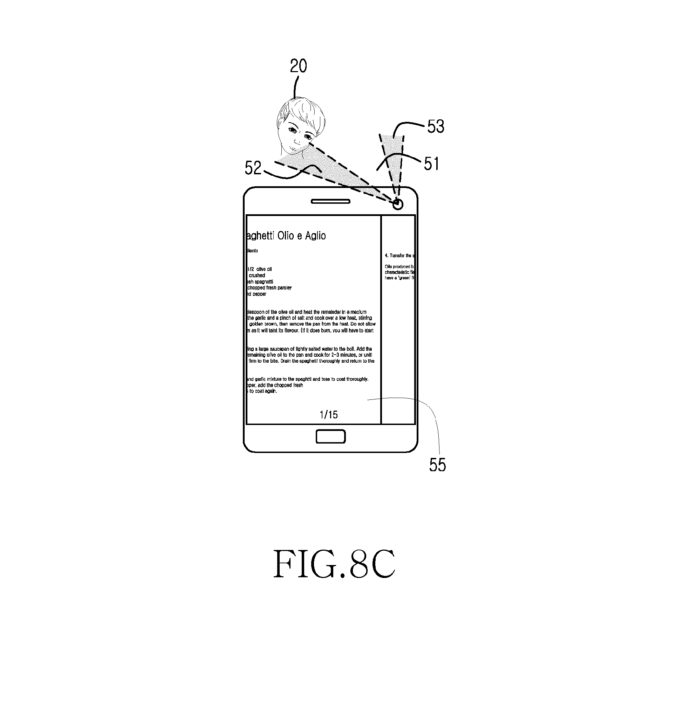

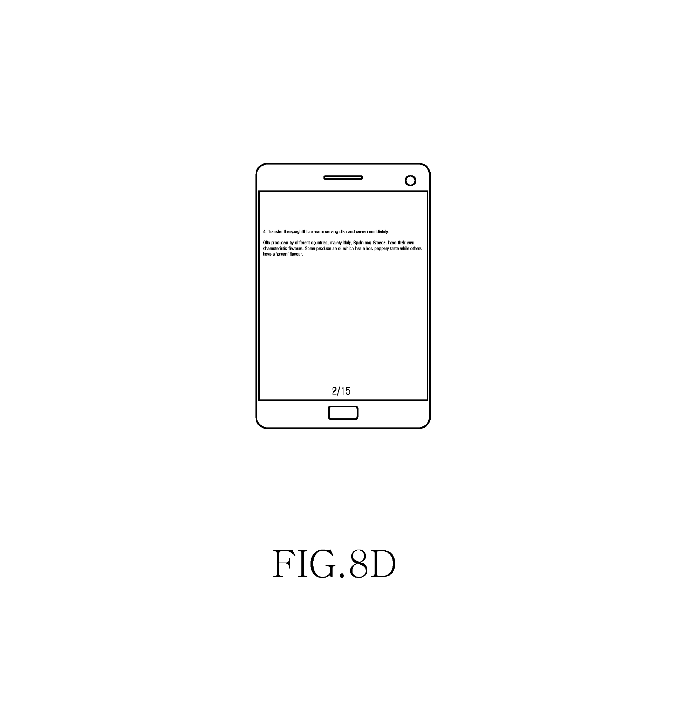

FIGs. 8A to 8D illustrate a UI method according to an exemplary embodiment of the present invention.

Referring to FIGs. 8A to 8D, a description will be given with respect to a webpage screen.

As illustrated in FIGs. 8A to 8D, a camera module divides a photographing region of a camera into a middle portion of the photographing region 51, a left portion of the photographing region 52, and a right portion of the photographing region 53. Also, the camera module specifies an operation matched with the middle portion of the photographing region 51 as an operation for providing a visual cue for screen change. The camera module specifies an operation matched with the left portion of the photographing region 52 as a change operation to a previous screen and specifies an operation matched with the right portion of the photographing region 53 as a change operation to a next screen.

Also, the camera module specifies motion information matched with the middle portion of the photographing region 51 as a left movement or right movement of a face of a user 20. If the left movement of the face is verified, the camera module provides a visual cue for informing change to a previous webpage in advance. If the left movement of the face is verified, the camera module provides a visual cue for informing change to a next webpage in advance. The visual cue does not immediately result in performance of a change operation to the previous or next webpage. Rather, the visual cue results in informing the user 20 of the change operation in advance.

In addition, the camera module provides a visual cue for informing screen change to a previous webpage in advance according to a command verified from an image signal output from the middle portion of the photographing region 51. The camera module performs an operation according to a command corresponding to information acquired from an image signal output from the left portion of the photographing region 52 related to the visual cue. Also, the camera module provides a visual cue for informing screen change to a next webpage in advance according to the command verified from the image signal output from the middle portion of the photographing region 51. The camera module performs an operation according to a command corresponding to information acquired from an image signal output from the right portion of the photographing region 53 related to the visual cue.

For example, the camera module verifies a next portion of the photographing region related to an operation performed from the image signal output from the middle portion of the photographing region 51, acquires information from an image signal output from the verified next portion of the photographing region, and performs an operation according to a command corresponding to the acquired information.

The camera module may determine a next portion of the photographing region related to information from the information acquired from an image signal output from the middle portion of the photographing region 51, may acquire information from an image signal output from the determined next portion of the photographing region, and may perform an operation according to a command corresponding to the acquired information. For example, the camera module may perform a certain process of detecting a movement direction of the face of the user from an image signal output from the middle portion of the photographing region 51, providing a visual cue for informing screen change to a previous webpage and screen change to a next webpage in advance, verifying a next portion of the photographing region which is in the detected movement direction of the face, acquiring information from an image signal output from the verified next portion of the photographing region, and performing an operation according to a command corresponding to the verified information.

According to exemplary embodiments of the present invention, camera module specifies motion information matched with the left portion of the photographing region 52 as a nod. If the nod is verified, the camera module performs an operation changed to a previous webpage. Also, the camera module specifies motion information matched with the right portion of the photographing region 52 as a nod. If the nod is verified, the camera module performs an operation to change to a next webpage.

As described above, when the camera module provides a visual cue for informing change to a previous webpage, the camera module acquires information from an image signal output from the left portion of the photographing region 52 related to the visual cue. When the information is information corresponds to a nod, the camera module performs an operation changed to the previous webpage. Also, when the camera module provides a visual cue for informing change to a next webpage, the camera module acquires information from an image signal output from the right portion of the photographing region 53 related to the visual cue. When the information is information corresponds to a nod, the camera module performs an operation changed to the next webpage.

FIGs. 8A to 8D illustrate a visual cue 55 for informing change to a next webpage screen when the face of the user is moved to a right side and then illustrate change to a next webpage screen by a nod according to an exemplary embodiment of the present invention.

FIGs. 8A to 8D illustrate, but are not limited to, screen change taken as an example according to an exemplary embodiment of the present invention. For example, exemplary embodiments of the present invention may be applied to screen enlargement or reduction and video or audio-related operations related to other electronic devices.

The camera module divides a photographing region of the camera into a plurality of portions of the photographing region. When the camera module detects that an object is moved from a first portion of the photographing region to a second portion of the photographing region from an image signal from the photographing region, the camera module performs a first operation. When the camera module detects a corresponding motion of the object from an image signal output from the second photographing region, the camera module may perform a second operation. For example, when the camera module detects movement of a face of the user from the middle portion of the photographing region 51 to the left portion of the photographing region 52 from an image signal output from a photographing region, the camera module provides a visual cue for informing change to a previous webpage screen in advance. When the camera module detects a nod from an image signal output from the left portion of the photographing region 52, the camera module performs change to a previous webpage screen.

According to exemplary embodiments of the present invention, other visual cues for confirming or verifying a desired operation may include a facial expression, movement of the user's 20 eyes, and the like.

Methods according to exemplary embodiments described herein may be implemented as hardware, software, or combinational type of the hardware and the software.

When the method is implemented by the software, a non-transitory computer-readable storage medium for storing one or more programs (software modules) may be provided. The one or more programs stored in the non-transitory computer-readable storage medium are configured for being executed by one or more processors in an electronic device. The one or more programs include instructions for allowing an electronic device to execute the methods according to exemplary embodiments described herein.

These programs (software module, software) may be stored in a RAM, a non-volatile memory including a flash memory, a Read Only Memory (ROM), an Electrically Erasable Programmable ROM (EEPROM), a magnetic disc storage device, a Compact Disc-ROM (CD-ROM), a Digital Versatile Disc (DVD) or an optical storage device of a different type, and a magnetic cassette. Or, the programs may be stored in a memory configured by combination of some or all of them. Also, the configured memory may include a plurality of memories.

Also, the programs may be stored in an attachable storage device capable of accessing an electronic device through each of communication networks such as the Internet, an intranet, a Local Area Network (LAN), a Wide LAN (WLAN), a Storage Area Network (SAN), and the like, or a communication network configured by combination thereof. This storage device may connect to the electronic device through an external port.

Also, a separate storage device on a communication network may connect to a portable electronic device.

A UI method and an apparatus therefor according to an exemplary embodiment of the present invention may control an operation of a portable electronic device without operating a button of the portable electronic device. Also, a UI method and an apparatus therefor according to an exemplary embodiment of the present invention may improve availability of a portable electronic device by generating input capable of replacing a button push event or a touch event of the portable electronic device from a motion of a user.

While the present invention has been shown and described with reference to certain exemplary embodiments thereof, it will be understood by those skilled in the art that various changes in form and details may be made therein without departing from the spirit and scope of the invention as defined by the appended claims and their equivalents.

## Claims

1. A method comprising:
dividing a photographing region into a plurality of portions of the photographing region;
acquiring corresponding information from respective image signals output while being classified according to the divided portion of the photographing region;
verifying a command corresponding to the acquired information; and
performing an operation according to the verified command.

2. The method of claim 1, wherein the acquiring of the corresponding information from the respective image signals output while being classified according to the divided portion of the photographing region comprises:
acquiring information from an image signal output from a previous portion of the photographing region among the divided portion of the photographing region; and
acquiring information from an image signal output from a next portion of the photographing region after a threshold time.

3. The method of claim 1, wherein the acquiring of the corresponding information from the respective image signals output while being classified according to the divided portion of the photographing region comprises:
performing an operation according to a command corresponding to information acquired from an image signal output from a previous portion of the photographing region among the divided portion of the photographing region; and
acquiring information from an image signal output from a next portion of the photographing region when the operation is completed.

4. The method of claim 1, wherein the acquiring of the corresponding information from the respective image signals output while being classified according to the divided portion of the photographing region comprises:
performing an operation according to a command corresponding to information acquired from an image signal output from a previous portion of the photographing region among the divided portion of the photographing region;
verifying a next portion of the photographing region related to the operation;
and
acquiring information from an image signal output from the verified next portion of the photographing region.

5. The method of claim 1, wherein the acquiring of the corresponding information from the respective image signals output while being classified according to the divided portion of the photographing region comprises:
detecting a movement direction of an object from an image signal output from a previous portion of the photographing region among the divided portion of the photographing region;
verifying a next portion of the photographing region which is in the detected movement direction;
acquiring information from an image signal output from the verified next portion of the photographing region.

6. The method of claim 1, wherein the acquiring of the corresponding information from the respective image signals output while being classified according to the divided portion of the photographing region comprises acquiring motion information of an object.

7. The method of claim 1, wherein the verification of the command corresponding to the acquired information comprises determining the command when the command corresponding to the information acquired from the image signal output from each of the portion of the photographing region is identical to a command which is previously specified at each of the portion of the photographing region.

8. The method of claim 1, wherein the performing of the operation according to the verified command comprises providing a visual cue.

9. An electronic device comprising:
a camera;
at least one processor;
a memory; and
at least one module, each of which is stored in the memory and is configured to be executed by the at least one processor,
wherein at least one of the at least one module divides a photographing region of the camera into a plurality of portions of the photographing region, acquires corresponding information from respective image signals output while being classified according to the divided portion of the photographing region, verifies a command corresponding to the acquired information, and performs an operation according to the verified command.

10. The device of claim 9, wherein at least one of the at least one module acquires information from an image signal output from a previous portion of the photographing region among the divided portion of the photographing region and acquires information from an image signal output from a next portion of the photographing region after a threshold time.

11. The device of claim 9, wherein at least one of the at least one module performs an operation according to a command corresponding to information acquired from an image signal output from a previous portion of the photographing region among the divided portion of the photographing region and acquires information from an image signal output from a next portion of the photographing region when the operation is completed.

12. The device of claim 9, wherein at least one of the at least one module performs an operation according to a command corresponding to information acquired from an image signal output from a previous portion of the photographing region among the divided portion of the photographing region, verifies a next portion of the photographing region related to the operation, and acquires information from an image signal output from the verified next portion of the photographing region.

13. The device of claim 9, wherein at least one of the at least one module detects a movement direction of an object from an image signal output from a previous portion of the photographing region among the divided portion of the photographing region, verifies a next portion of the photographing region which is in the detected movement direction, and acquires information from an image signal output from the verified next portion of the photographing region.

14. The device of claim 9, wherein each of the one or more modules acquires motion information of an object from the respective image signals output while being classified according to the divided portion of the photographing regions.

15. The device of claim 9, wherein at least one of the at least one module determines the command when the command corresponding to the information acquired from the image signal output from each of the portions of the photographing region is identical to a command which is previously specified at each of the portions of the photographing region.
